# EUROPÄISCHE PATENTSCHRIFT

(11) **EP 2 410 201 B1**
(45) Veröffentlichungstag und Bekanntmachung des Hinweises auf die Patenterteilung: **20.02.2013**
(21) Anmeldenummer: 11185612.6
(22) Anmeldetag: 16.11.2010
(51) Int. Cl.: F16F 1/44, A47J 43/07

(54) **Standfuß, insbesondere für eine Tisch-Küchenmaschine**
Base, in particular for a table kitchen appliance
Pied de support, notamment pour une machine de cuisine sur table

(30) Priorität: 21.11.2009 DE 102009054201
(43) Veröffentlichungstag der Anmeldung: 25.01.2012
(62) Teilanmeldung aus: 10191350.7
(73) Patentinhaber: Vorwerk & Co. Interholding GmbH, 42275 Wuppertal (DE)
(72) Erfinder: Schomacher, Jutta, 42489 Wülfrath (DE); Dallmeier, Stephanie, 42279 Wuppertal (DE)
(74) Vertreter: Müller, Enno

(56) Entgegenhaltungen:
- WO-A1-90/07658
- DE-U1- 8 811 934
- US-A1- 2005 115 022

## Beschreibung

Die Erfindung betrifft einen Standfuß nach den Merkmalen des Oberbegriffes des Anspruchs 1.

Standfüße insbesondere für Küchenmaschinen sind bekannt. Diese sind zur Abstützung der Küchenmaschine auf einer Fläche, insbesondere auf einer Tischfläche ausgelegt, wobei weiter bevorzugt über den Standfuß in der Küchenmaschine hervorgerufene Sprünge und Schwingungen reduziert werden. Hierbei besteht das Elastomerteil bevorzugt aus einem Gummimaterial oder aus einem thermoplastischen Elastomer.

Aus der DE 88 11 934 U1 ist für ein Motorlager für Kleinmotoren ein Standfuß bekannt, bei dem das Elastomerteil unterseitig in eine schalenartige Form übergeht, die außenseitig formschlüssig eine Gehäuse-Leiterplatte umgreift. Eine Auslenkung des Verbindungsabschnittes ist nur im begrenzten Ausmaß möglich. Bei einer ein Ringteil aufweisenden Ausführungsform, über welches der Standfuß sich auf einer Fläche abstützt, ist ein Verbindungsabschnitt über radiale Stege an dem Kreisteil abgestützt, so dass der Verbindungsabschnitt sich über diese Stege und das Kreisteil auf dem Boden abstützt.

Aus der WO90/07658 A ist ein Standfuß bekannt, der einen Doppelboden aufweist, wobei der Verbindungsabschnitt sich erst von dem oberen Boden ausgehend nach oben erstreckt.

Aus der US 2005/0115022 A1 ist ein hülsenartiges Teil bekannt, das auf einen Möbelfuß von unten aufgeschoben wird, wobei der Möbelfuß in das Innere des Schalenteils eingreift.

Ausgehend von dem zunächst genannten Stand der Technik beschäftigt sich die Erfindung mit der Aufgabe, einen Standfuß anzugeben, der insbesondere im Hinblick auf eine Küchenmaschine geeignet ist.

Diese Aufgabe ist beim Gegenstand des Anspruches 1 gelöst, wobei darauf abgestellt ist, dass ein Schalenboden, der umgeben von der Schalenwandung in Verbindungsabschnitt trägt, sich im Betriebszustand auf einer Tischfläche oder dergleichen abstützt und dass die Schalenöffnung nach vertikal oben weist.

Anbindungsbereich und Verbindungsabschnitt des Elastomerteils sind hierbei in bevorzugter Ausgestaltung einstückig, weiter bevorzugt materialeinheitlich ausgebildet, weiter bevorzugt entsprechend elastomere Eigenschaften aufweisend. Das Elastomerteil weist das die Standfläche ausbildende Schalenteil auf. Der Schalenboden trägt umgeben von der Schalenwandung den Verbindungsabschnitt, wobei auch hier bevorzugt eine einstückige, weiter bevorzugt materialeinheitliche Verbindung von Verbindungsabschnitt und Schalenteil gewählt ist. Zufolge dieser Ausgestaltung ist eine Stoßenergie, beispielsweise resultierend aus einem Rührbetrieb der Küchenmaschine, in Rückstell- und Verformungsenergie des Elastomerteils umwandelbar. Durch die beschriebene geometrische Gestaltung ist eine hohe Steifigkeit in vertikaler Richtung bei gleichzeitiger hoher Elastizität in horizontaler Richtung realisiert. Stöße bzw. Schwingungen in Horizontalrichtung werden zufolge elastischer Auslenkung des an dem Schalenteil wurzelnden Verbindungsabschnittes aufgefangen, derart, dass sich keine Relativverlagerung des so gebildeten Standfußes gegenüber der Aufstellfläche (Tischfläche) einstellt. Die Verschwenkbarkeit des Verbindungsabschnittes ist begrenzt durch die umlaufende Schalenwandung, welche in einer maximalen Auslenkstellung des Verbindungsabschnittes eine zusätzliche Abstützung desselben erbringt und somit entsprechend das Maß einer maximalen Auslenkung definiert.

Der Verbindungsabschnitt ist in einer bevorzugten Ausgestaltung als Massivkörper gebildet. Günstigere Eigenschaften zur Umwandlung von Stoßenergie in Verformungsenergie sind erreicht bei Ausbildungen des Verbindungsabschnittes als Hohlkörper, weiter bevorzugt durch rohrartige Ausgestaltung desselben, wobei bevorzugt die Rohrachse vertikal verläuft, weiter bevorzugt senkrecht zu einer Standfläche. Die Verbindung des Verbindungsabschnittes mit dem Schalenteil, insbesondere mit dem Schalenboden ist erreicht im Bereich eines Rohrendes. Die Rohrwandung wurzelt entsprechend in dem Schalenboden, geht weiter bevorzugt materialeinheitlich und einteilig in diesen über. Dieser Übergang ist in bevorzugter Ausgestaltung im Querschnitt scharfkantig, kann jedoch in weiterer Ausgestaltung auch mit Radien ausgeführt sein, was die Elastizität beeinflusst. Auch können die Funktionseigenschaften durch eine weiche Anbindung des Verbindungsabschnittes an den Schalenboden optimiert werden.

Das freie Abstandsmaß zwischen einer Außenfläche des Verbindungsabschnittes und einer Innenfläche des umlaufenden Schalenteiles entspricht in weiter bevorzugter Ausgestaltung 1/10 bis 1/5 des Durchmessers des Verbindungsabschnittes, dies weiter mit Bezug auf den Bereich des Verbindungsabschnittes, der bei einer entsprechenden Auslenkung zuerst die umlaufende Schalenwandung kontaktiert.

In bevorzugter Ausgestaltung erstreckt sich die Schalenwandung nur über einen Teil der Höhe des Verbindungsabschnittes, so weiter bevorzugt nur über 1/4 bis 2/3 der Höhe des Verbindungsabschnittes, so dass Letzter mit dem dem Wurzelbereich abgewandten Ende frei über das Schalenteil, insbesondere über die Schalenwandung nach vertikal oben hinaus abragt, was eine günstige Anbindung an das Gerätegehäuse bietet. Die Anbindung ist hierbei weiter so gewählt (dies weiter auch in Abhängigkeit mit der vorbeschriebenen Vorstandslänge des Verbindungsabschnittes), dass eine Bodenunterseite des Gehäuses insbesondere im Anbindungsbereich vertikal beabstandet ist zu dem Schalenteil, weiter zu der nach vertikal oben weisenden Randkante der Schalenwandung.

Weiter bevorzugt geht die Schalenwandung radial außen in eine, zur Auflage auf den Boden bzw. auf der Aufstandsfläche ausgelegte Stützwandung über. Diese ist bevorzugt einstückig, weiter bevorzugt materialeinheitlich mit dem Schalenteil verbunden und bietet eine Abstützung des gesamten Elastomerteiles zur Sicherung desselben gegen Kippen.

Alle Zwischenwerte, insbesondere in 1 mm-Schritten und hinsichtlich einer ein-oder mehrfachen Einengung der angegebenen Bereichsgrenze in derselben Schrittweise, von oben und/oder von unten, sind hiermit in die Offenbarung eingeschlossen.

Nachstehend ist die Erfindung anhand der beigefügten Zeichnung, welche lediglich vier Ausführungsbeispiele darstellt, näher erläutert. Es zeigt:
- Fig. 1: in perspektivischer Darstellung eine Tisch-Küchenmaschine mit Standfüßen zum Aufstellen der Küchenmaschine auf einer Tischfläche;
- Fig. 2: einen gerätebodenseitig angeordneten Standfuß in einer nicht erfindungsgemässen Ausführungsform;
- Fig. 3: den Schnitt gemäß der Linie III-III in Fig. 2, eine unbelastete Grundstellung betreffend;
- Fig. 4: eine der Fig. 3 entsprechende Darstellung, jedoch in einer Belastungsstellung;
- Fig. 5: eine der Fig. 2 entsprechende Darstellung, jedoch eine zweite nicht erfindungsgemässe Ausführungsform betreffend;
- Fig. 6: den Schnitt gemäß der Linie VI-VI in Fig. 5;
- Fig. 7: eine Schnittdarstellung gemäß Fig. 6, eine belastete Stellung betreffend;
- Fig. 8: eine weitere der Fig. 2 entsprechende Darstellung, eine dritte nicht erfindungsgemässe Ausführungsform betreffend;
- Fig. 9: den Schnitt gemäß der Linie IX-IX in Fig. 8;
- Fig. 10: eine der Fig. 9 entsprechende Darstellung, eine Belastungsstellung betreffend;
- Fig. 11: eine der Fig. 2 entsprechende Darstellung, eine erfindungsgemässe Ausführungsform betreffend;
- Fig. 12: den Schnitt gemäß der Linie XII-XII in Fig. 11;
- Fig. 13: eine der Fig. 12 entsprechende Darstellung, jedoch im Zuge einer Belastung.

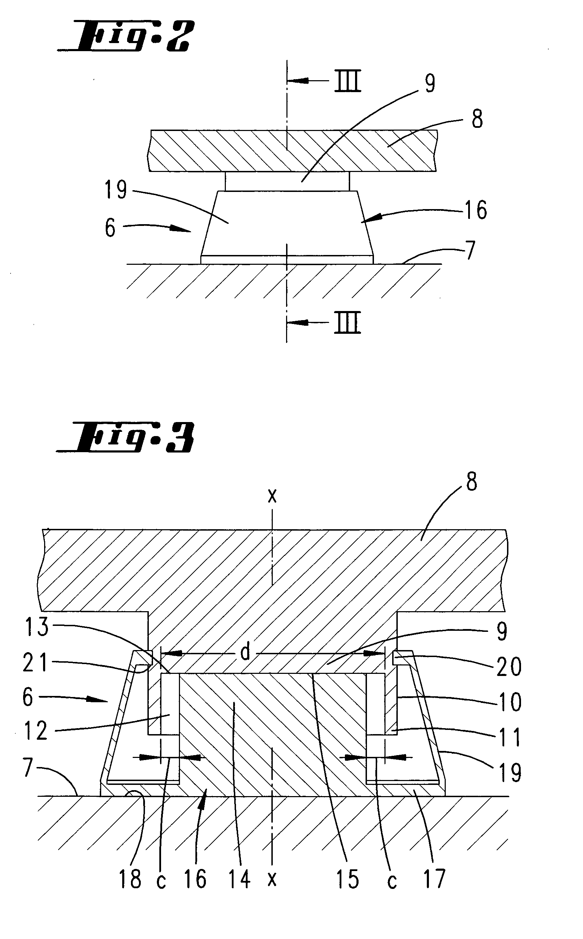

Die Figuren 2 bis 10 stellen keine Ausführungsformen der Erfindung dar.

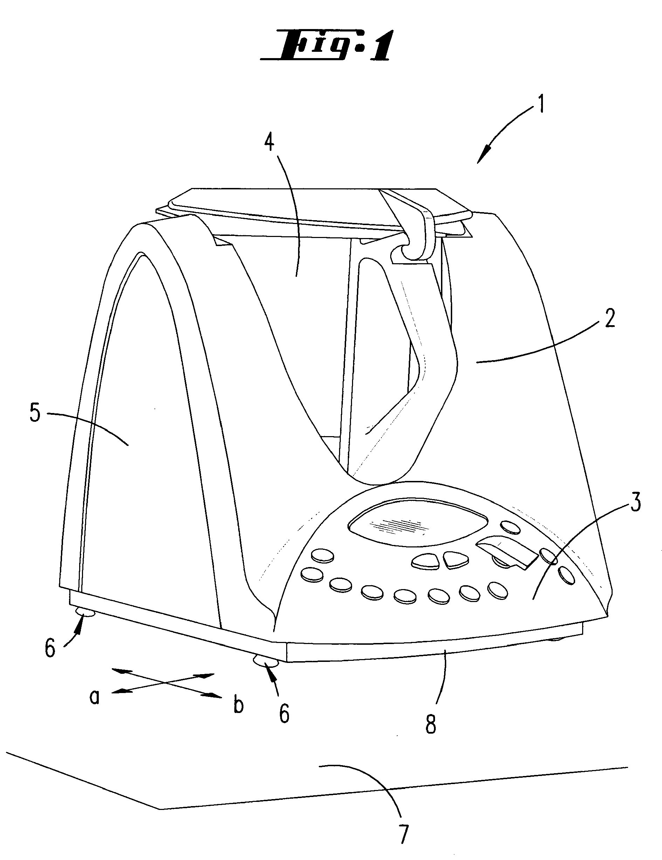

Dargestellt und beschrieben ist zunächst mit Bezug zu Fig. 1 eine Küchenmaschine 1 mit einer Rührgefäß-Aufnahme 2 und einem Bedienfeld 3.

Der Küchenmaschine 1 ist ein Rührtopf 4 zugeordnet. Dieser sitzt in der Rührgefäß-Aufnahme 2 ein. In dem Rührtopf 4 ist zugeordnet einem Rührtopfboden, ein Rührwerk vorgesehen, welches über einen in der Küchenmaschine 1 unterhalb der Aufnahme 2 angeordneten, nicht dargestellten Elektroantrieb betrieben wird.

Das Gehäuse 5 der Küchenmaschine 1 stützt sich über Stützfüße 6 auf einer Fläche, hier auf einer Tischfläche 7 ab. Die Stützfüße 6 sind hierzu unterseitig eines Gehäusebodens 8 befestigt.

Die Küchenmaschine 1 ist unter anderem geeignet zur Herstellung von Teigen. In einem solchen Teigmodus wird mit dem sich drehenden Rührwerk durch die Zähigkeit des Teiges ein hoher Widerstand entgegengesetzt. Das erforderliche Antriebsmoment des Motors wird über das Gehäuse 5 und die Stützfüße 6 abgestützt. Ist die Teigkugel ungünstig im Rührgefäß 4 angeordnet, bleibt das Rührwerk gegebenenfalls kurzzeitig im Teig stecken. Zufolge dessen wird das Drehmoment kurzzeitig erhöht. Dieser Momentenstoß wird von den Stützfüßen 6 kompensiert, so dass sich das Gerät nicht ruckartig und sprunghaft um seinen Schwerpunkt dreht.

Die Bewegung des Gehäuses 5 in horizontaler Richtung (vgl. Pfeile a und b in Fig. 1) wird zugelassen. Das Gehäuse 5 kann sich relativ zu den Stützfüßen 6 bzw., wie nachstehend näher erläutert, relativ zu einem Teilabschnitt der Stützfüße 6 in der horizontalen Ebene bewegen. Die sprungartig eingeleitete Energie wird in Reibung und/oder Rückstell- und Verformungsenergie umgewandelt. Die Stützfüße 6 sind hierbei weiter mit der Standfläche - hier der Tischfläche 7 - verbunden, insbesondere reibschlüssig verbunden.

Die Fig. 2 bis 4 zeigen eine erste Ausführungsform eines Stützfußes 6. Dieser ist grundsätzlich zweiteilig gestaltet, wobei ein Teil gehäusefest vorgesehen ist. Hierbei handelt es sich um einen Fortsatz 9, der gehäuseseitig, insbesondere gehäusebodenseitig angeformt ist und nach vertikal unten über die nach unten gerichtete Gehäusebodenfläche abragt. Der Fortsatz 9 ist als Starrteil ausgebildet, weiter bevorzugt zufolge einstückiger, materialeinheitlicher Ausgestaltung zusammen mit dem Gehäuseboden 8. Entsprechend kann es sich bei dem Fortsatz 9 um einen Hartkunststoff- oder Metallkörper handeln, der weiter bevorzugt mit Bezug auf eine zentrale den Fortsatz 9 durchsetzende Vertikalachse x rotationssymmetrisch ausgebildet ist. Neben der einstückigen Ausgestaltung ist alternativ ein Fortsatz 9 vorgesehen, der unterseitig am Gehäuseboden 8 festlegbar, beispielsweise einschraubbar ist.

Der Fortsatz 9 formt ein sich nach vertikal unten öffnendes Schalenteil 10 aus, dessen Außendurchmesser dem Außendurchmesser des Fortsatzes 9 entspricht. Die umlaufende Schalenwandung 11 begrenzt in Horizontalrichtung einen Schalenraum 12, wobei die Wandungsstärke in dem dargestellten Ausführungsbeispiel etwa 1/20 des Schalenteil-Außendurchmessers entspricht. Die vertikale Höhe der Schalenwandung 11 entspricht bevorzugt etwa 1/4 des Schalenteil-Außendurchmessers.

Der sich hieraus ergebende Schalenboden 13 erstreckt sich in einer quer zur Vertikalachse x gerichteten Ebene, weiter in einer Horizontalebene, die entsprechend parallel ausgerichtet ist zur Tischfläche 7.

In das Schalenteil 10, weiter in den Schalenraum 12 eingreifend ist ein Dornteil 14 vorgesehen. Auch hierbei handelt es sich bevorzugt um ein rotationssymmetrisches Bauteil mit einer vertikal nach oben weisenden Stirnfläche 15, die parallel ausgerichtet ist zum Schalenboden 13, entsprechend sich auch bevorzugt in einer Horizontalebene erstreckt.

Das Dornteil 14 ist Teil eines Elastomerteils 16. Letzteres weist einen Boden 17 auf, mit einer vertikal nach unten weisenden Standfläche 18 zur Abstützung auf der Tischfläche 7. Der Boden 17 ist in dem dargestellten Ausführungsbeispiel im Grundriss kreisrund als Scheibe ausgebildet, mit einem Durchmesser, der etwa dem 2-Fachen des Außendurchmessers des Dornteils 14 entspricht. Letzteres sitzt zentral auf dem Boden 17 und ist mit diesem verbunden, weiter bevorzugt materialeinheitlich und einstückig mit diesem verbunden.

Die vertikale Höhe des Dornteiles 14 ist so gewählt, dass das Schalenteil 10 in Zuordnungsstellung, d. h. in der Auflagestellung des Schalenbodens 13 auf der Stirnfläche 15 des Dornteils 14 freikragend endet, d. h. mit vertikalem Abstand zur zugewandten Oberfläche des elastomerteilseitigen Bodens 17 endet. So ist in dem dargestellten Ausführungsbeispiel eine vertikale Höhe des Dornteiles 14 gewählt, die etwa dem 2-Fachen der vertikalen Tiefe des Schalenteiles 10 bzw. der vertikalen Höhe der Schalenwandung 11 entspricht.

Das Dornteil 13 ist in dem Schalenteil 10 mit einem quer zu der Dornerstreckung verbleibenden Spiel aufgenommen, so dass eine relative Beweglichkeit des Schalenteils 10 bzw. des Fortsatzes 9 zu dem Dornteil 14 erreichbar ist. So entspricht in dem dargestellten Ausführungsbeispiel das verbleibende Spiel (Addition der sich beidseitig des Dornteiles 14 in Fig. 3 einstellenden Spielmaße c) zusammengefasst etwa 1/6 des freien Innendurchmessers d des Schalenteiles 10.

Außenseitig ist das Schalenteil 10 umfasst von einem Mantelabschnitt 19 des Elastomerteils 16. Letzterer ist an dem Boden 17 des Elastomerteils 16 entlang der Randkante angebunden und erstreckt sich hüllenartig unter konischer Verjüngung bei zunehmender vertikaler Beabstandung zum Boden 17 bis in den Übergangsbereich von Schalenteil 10 und Fortsatz 9. Hier ist der Mantelabschnitt 19 an dem Fortsatz 9 rastgehaltert, wozu eine entsprechende umlaufende Verdichtung 20 des Mantelabschnittes 19 in eine wandungsaußenseitig des Fortsatzes 9 vorgesehene Ringnut 21 eingreift.

Der Mantelabschnitt 19 ist insbesondere gegenüber dem Boden 17 verdünnt ausgebildet, weiter membranartig mit einer Materialstärke von 0,1 bis 0,5 mm. Hieraus ergibt sich eine hohe Flexibilität des Mantelabschnittes 19. Letzterer ist zufolge der bevorzugt einheitlichen Elastomereigenschaften elastisch rückstellfähig eingestellt. Mittels des Mantelabschnittes 19 ist der Zusammenwirkungsbereich von Dornteil 14 und Schalenteil 10 beispielsweise vor Verschmutzungen geschützt. Zudem ist hierdurch eine unverlierbare Anbindung des Dornteiles 14 an den Fortsatz 9 gegeben.

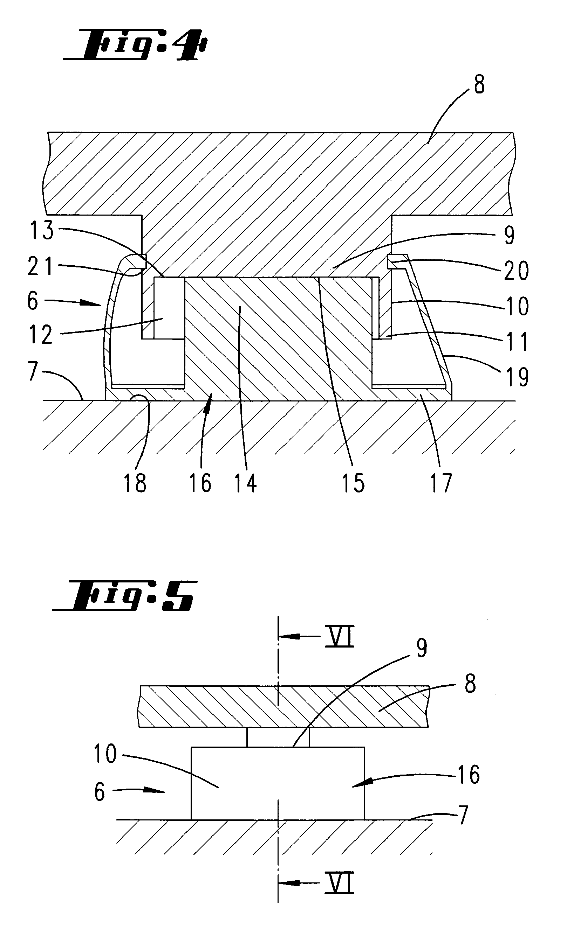

Zufolge der vorbeschriebenen Ausgestaltung eines Stützfußes 6 ist eine schwimmende Lagerung in der horizontalen Bewegungsrichtung a und b gegeben, wobei in vertikaler Bewegungsrichtung die Verbindung zwischen Fortsatz und Elastomerteil 16 steif gestaltet ist, so dass unterkritische Schwingungen, beispielsweise hervorgerufen durch eine Unwuchterregung, gut kompensiert werden können. Hierbei ist ein Abgleiten des Fortsatzes 9 relativ zu dem Dornteil 14 im Bereich der aufeinanderliegenden Flächen (Schalenboden 13 und Stirnfläche 15) erreichbar (vgl. Fig. 4), wobei die Horizontalbewegung zufolge der überlappenden Schalenwandung 11 begrenzt ist.

Hierbei ist der Reibungswiderstand zwischen Schalenboden und Stirnfläche 15 des Dornteiles 14 geringer als der Reibungswiderstand zwischen der Standfläche 18 des Elastomerteils 16 und der Tischfläche 7.

Der als dünne elastische Schicht ausgebildete Mantelabschnitt 19 beeinträchtigt hierbei nicht die Bewegung des Gehäuses 5 bzw. des an diesem fest angebrachten Fortsatzes 9, sondern dient lediglich zur Fixierung beim Hochheben und Tragen des Gerätes sowie zur Abdeckung des geschaffenen Hohlraums. Durch Aufhebung der Rastverbindung kann das Elastomerteil 16 leicht abgenommen werden und so separat gereinigt werden.

Zur Bildung des Elastomerteils 16 kommen bevorzugt Naturkautschuke oder synthetische Kautschuke wie beispielsweise Styrol-Butadien-Kautschuk zur Anwendung.

Die Fig. 5 bis 7 zeigen eine zweite Ausführungsform. Hier formt der gehäuseseitige Fortsatz 9 ein nach vertikal unten weisendes, starres Dornteil 14 aus, das in ein nach vertikal oben offenes Schalenteil 10 eintaucht. Das Schalenteil 10 ist hier als Elastomerteil 16 gebildet, mit einem mit seiner Standfläche 18 in der Nutzungsstellung auf der Tischfläche 7 aufliegenden Schalenboden 13 und einer bodenseitig, randseitig bevorzugt umlaufenden Schalenwandung 11, deren vertikale Höhe geringer bemessen ist als die des Dornteils 14. Letzteres stützt sich mit der vertikal nach unten weisenden Stirnfläche auf der zugewandten Oberfläche des Schalenbodens 13 ab.

Die Zusammenwirkung von dornteilseitiger Stirnfläche 15 und zugewandter Oberfläche des Schalenbodens 13 ist auch in diesem Ausführungsbeispiel in einer ebenen Fläche erreicht, weiter bevorzugt in einer Horizontalebene.

Das Schalenteil 10 weist in dem dargestellten Ausführungsbeispiel einen Innendurchmesser auf, der etwa dem 3-Fachen des Dornteildurchmessers entspricht. Demzufolge ist das Dornteil 14 auch hier mit einem horizontalen Spiel in dem Schalenteil 10 aufgenommen, so dass eine Relativverlagerung zufolge Stöße oder Schwingungen in der Küchenmaschine 1 erlaubt sind. Auch ist hierbei der Reibungswiderstand zwischen der dornteilseitigen Stirnfläche 15 und dem Schalenboden 13 geringer gewählt als zwischen der Standfläche 18 des Schalenbodens 13 und der Tischfläche 7, so dass das schalenartige Elastomerteil 16 auch bei Einleitung sprungartiger Energie mit der Tischfläche 7 verbunden bleibt.

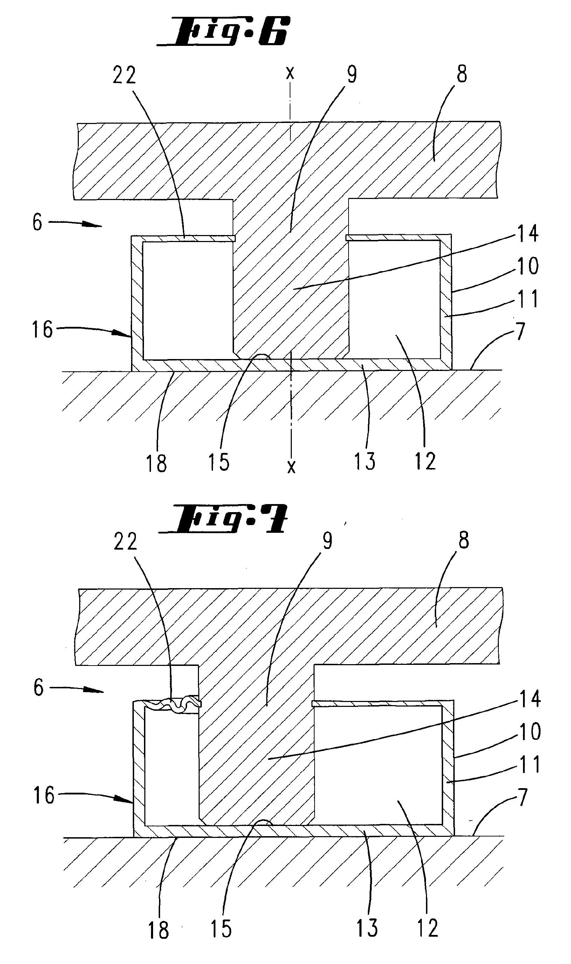

Der Schalenraum 12 ist überdeckt von einer vom Dornteil 14 durchsetzten Schalendecke 22. Diese ist, wie der Mantelabschnitt 19 der ersten Ausführungsform, gegenüber der Schalenwandung 11 hinsichtlich der Materialstärke verringert, zur Bildung der Schalendecke 22 in Art einer elastischen Membran. Diese Schalendecke 22 ist umlaufend im Bereich des freien nach vertikal oben ragenden Randes an der Schalenwandung 11 befestigt und weist in einer Grundausrichtung zentral eine Durchtrittsöffnung für das Dornteil 14 auf. Entlang des Randes der Durchtrittsöffnung ist die membranartige Schalendecke 22 beispielsweise durch Verkleben oder Verschweißen mit dem Dornteil 14 verbunden (vgl. Fig. 6).

Zufolge dieser Anordnung ist der Schalenraum 12 verschlossen. Durch die rückstellfähig elastische Ausgestaltung der Schalendecke 22 kann diese zufolge Dehnung bzw. Stauchung die Horizontalbewegung des Dornteiles 14 relativ zum Schalenteil 10 mit vollziehen (vgl. Fig. 7).

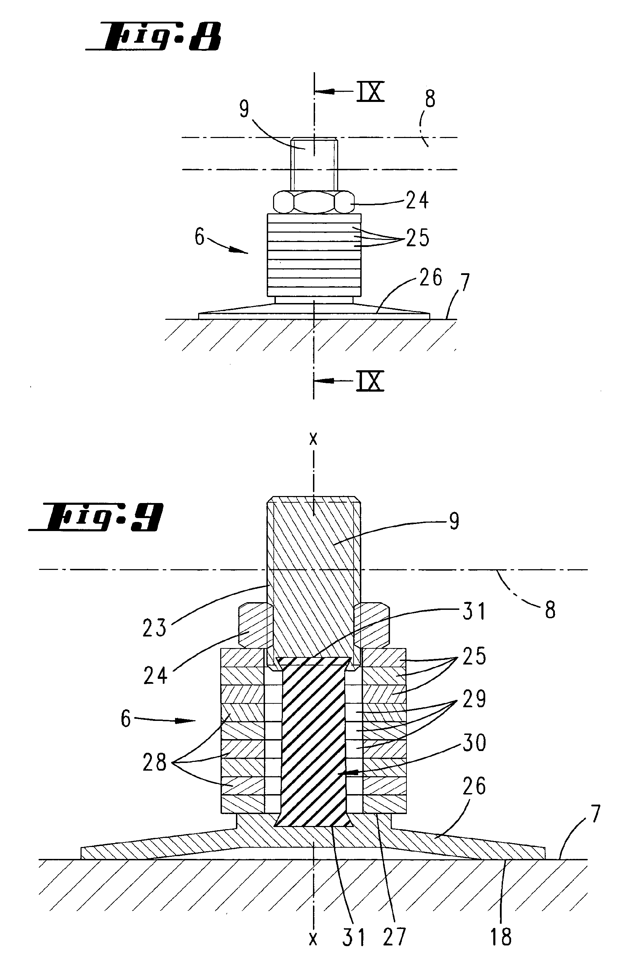

Eine weitere Ausführungsform zeigen die Fig. 8 bis 10. Auch in dieser Ausführungsform weist das Gehäuse 5 der Küchenmaschine 1 einen nach vertikal unten abragenden Fortsatz 9 auf. Dieser ist als Starrteil, insbesondere als Hartkunststoff- oder Metallteil ausgebildet, dies weiter zapfenartig rotationssymmetrisch.

Der Fortsatz 9 weist ein Außengewinde 23 auf. Auf dieses ist eine Schraubmutter 24 aufgedreht, über welche sich der Fortsatz 9 unter Zwischenschaltung von Scheibenteilen 25 auf einem die Standfläche 18 ausbildenden Standteil 26 abstützt. Letzteres ist zunächst tellerartig gestaltet mit einem Durchmesser, der einem Mehrfachen, in dem dargestellten Ausführungsbeispiel etwa einem 4-Fachen des Fortsatz-Durchmessers entspricht. Der mittige Bereich des Standteiles 26 ist gegenüber der Standfläche 18 erhaben, so dass sich die Standfläche 18 umlaufend randseitig des Standteiles 26 ergibt.

Der mittige erhabene Bereich des Standteiles 26 formt eine sich in einer Horizontalebene erstreckende Stützfläche 27.

Zwischen der fortsatzseitigen Schraubmutter 24 und der standteilseitigen Stützfläche 27 sind in dem dargestellten Ausführungsbeispiel neun flächig aufeinanderliegende Scheibenteile 25 gespannt. Diese Scheibenteile 25 sind als Ringteile 28 ausgebildet, weisen entsprechend jeweils eine zentrale Durchtrittsöffnung 29 auf. Hierbei ist der Durchmesser der Durchtrittsöffnung 29 angepasst an den Außendurchmesser des Fortsatzes 9, weiter bevorzugt diesen Außendurchmesser geringfügig übertreffend, so dass ein nach vertikal unten weisendes Ende des Fortsatzes 9 je nach Drehverlagerung der Schraubmutter 24 mehr oder weniger in eine oder mehrere Durchtrittsöffnungen 29 der Scheibenteile 25 eintaucht.

Die Scheibenteile 25 sind weiter bevorzugt gleichgestaltet, dies zunächst insbesondere hinsichtlich ihrer in Vertikalrichtung betrachteten Dicke als auch hinsichtlich ihrer Innen- und Außendurchmesser. Weiter sind die Scheibenteile 25 bevorzugt auch hinsichtlich der Materialwahl gleichgestaltet, wobei weiter die Scheibenteile 25 aus einem Hartkunststoff oder auch aus einem Metallwerkstoff bestehen.

Die Scheibenteile 25 sind im Bereich ihrer Durchtrittsöffnungen 29 durchsetzt von einem Elastomerteil 30. Hierbei handelt es sich um ein insgesamt schnurartiges Elastomerteil, das beidseitig endseitig verankert ist, nämlich zum einen im Bereich der in Richtung auf die Durchtrittsöffnungen 29 weisenden Stirnseite des Fortsatzes 9 und zum anderen in dem Mittenabschnitt des Standteiles 26. Zur Verankerung ist in dem dargestellten Ausführungsbeispiel die jeweilige Aufnahme 31 für das Elastomerteilende hinterschnitten. Entsprechend ist das Elastomerteil 30 so festgelegt, dass sich dieses auch unter üblicher Zugbeanspruchung nicht aus der jeweiligen Verankerung lösen kann.

Die übereinandergestapelten Scheibenteile 25 liegen plan mit ihren Reibflächen aufeinander, wobei diese zufolge der mittigen Durchsetzung mit dem Elastomerteil 39 horizontal flexibel übereinandergestapelt sind. Das als elastisches Band oder als elastische Schnur gebildete Elastomerteil 30 verbindet die Reibflächen zu einer lose gebundenen Komponente, wobei die Flexibilität und damit die horizontale Begrenzung und Beweglichkeit insbesondere durch die Länge, den Durchmesser und die Materialwahl der Scheibenteile 25 einstellbar ist.

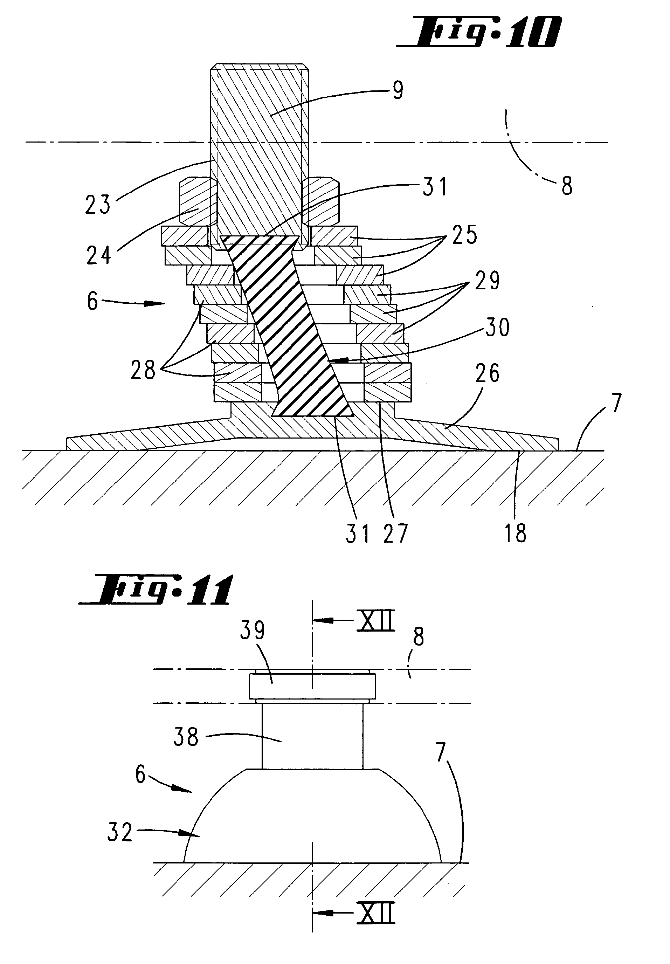

In Fig. 9 ist eine ideale Grundstellung des Stützfußes 6 dargestellt. Zufolge vorbeschriebener Belastungen in Horizontalrichtung (Pfeile a + b) ergibt sich eine unter Umständen ungleichmäßige Verlagerung der Scheibenteile 25 gemäß Fig. 10, wobei zufolge der Verspannung des Fortsatzes 9 gegen das Standteil 26 das Elastomerteil 30 auf Zug beansprucht wird. Das Elastomerteil 30 ist hierbei weiter bevorzugt so ausgelegt, dass über dieses eine Rückstellung in die Grundstellung gemäß Fig. 9 erreicht werden kann. Weiter wird jedoch im laufenden Betrieb der Küchenmaschine 1 immer wieder eine neue, zufällige Ausrichtung der Scheibenteile 25 zueinander sowie eine Ausrichtung des Fortsatzes 9 zu den Scheibenteilen 25 erreicht.

Die Schraubmutter 24 dient in erster Linie zur Verhinderung des Verlierens eines der Funktionselemente. Darüber hinaus ist über die Schraubmutter 24 eine Vorspannung der Funktionselemente erreichbar, um so die Reibungseigenschaften zu variieren. Das die Schraubmutter 24 tragende Außengewinde 23 dient bevorzugt weiter auch zur Festlegung des Fortsatzes 9 am Gehäuse 5, insbesondere am Gehäuseboden 8.

Eine erfindungsgemässe Ausführungsform zeigen die Fig. 11 bis 13. Hier ist der Stützfuß 6 einteilig, bevorzugt materialeinheitlich als Elastomerteil 32 gebildet. Dieses setzt sich zusammen aus einem nach vertikal oben offenen Schalenteil 33, dessen Schalenboden 34 unterseitig die Standfläche 35 bildet. Auch hierbei handelt es sich bevorzugt um ein rotationssymmetrisches Teil. Die entsprechend umlaufende, schalenbodenrandseitig angeordnete und sich nach vertikal oben erstreckende Schalenwandung weist eine vertikale Höhe auf, die etwa dem Außenradius des Schalenbodens 34 entspricht.

Radial außen geht die Schalenwandung 36 in eine, zur Auflage auf die Tischfläche 7 ausgelegte Stützwandung 37 über. Diese setzt am frei nach vertikal oben abragenden Ende der Schalenwandung 36 an und erstreckt sich in einem Querschnitt betrachtet kreisabschnittförmig bis zur Ebene der Standfläche 35, so dass sich insgesamt eine kalottenartige Form des Schalenteiles 33 einstellt.

Die nach vertikal oben weisende frei Randkante der Schalenwandung 36 definiert eine Austrittsebene. Durch diese tritt ein rohrartiger Verbindungsabschnitt 38. Dieser wurzelt fußseitig in dem Schalenboden 34 und ist bevorzugt materialeinheitlich, einteilig, mit diesem verbunden. Bei zentrischer Zuordnung des Verbindungsabschnittes 38 zum Schalenteil 33 weist der Verbindungsabschnitt 38 einen Außendurchmesser e auf, der in dem dargestellten Ausführungsbeispiel etwa dem 0,8-Fachen des geringsten freien Innendurchmessers des Schalenteiles 33 entspricht. Hieraus ergibt sich ein entsprechendes Abstandsmaß f zwischen der Außenwandung des Verbindungsabschnittes 38 und der Innenfläche der Schalenwandung, welches bevorzugt 1 bis 5mm beträgt.

Der rohrartige Verbindungsabschnitt 38 erstreckt sich über eine etwa dem 2-Fachen der vertikalen Höhe der Schalenwandung 36 entsprechende Länge und formt in dem über das Schalenteil 33 hinausragenden Endabschnitt einen Anbindungsbereich 39 aus. Dieser ist gebildet durch eine radiale Verdickung mittels welcher der so gebildete Stützfuß 6 an dem Gehäuseboden 8 festlegbar ist.

Bei dem vorbeschriebenen Stützfuß 6 wird die Stoßenergie in Rückstell- und Verformungsenergie umgewandelt, wobei das Elastomerteil 32 in Art einer Elastomerfeder wirkt. Durch die geometrische Gestaltung ist eine hohe Steifigkeit in vertikaler Richtung zufolge des zylindrisch ausgestalteten Verbindungsabschnittes 38 bei gleichzeitiger hoher Elastizität in horizontaler Richtung zufolge der Anbindung des Verbindungsabschnittes 38 an dem Schalenteil 33 realisiert.

Entsprechende Stöße werden zufolge Verformung bzw. Auslenken des Verbindungsabschnittes 38 aus der Vertikalachse heraus kompensiert, wobei die Schalenwandung 37 in Abhängigkeit von einer Auslenkung des Verbindungsabschnittes 38 gegebenenfalls eine zusätzliche Abstützung erbringt, in dem sich die Wandungsaußenseite des Verbindungsabschnittes 38 punktartig im Bereich der Austrittsebene an einem zugeordneten Randabschnitt der Schalenwandung 36 abstützt.

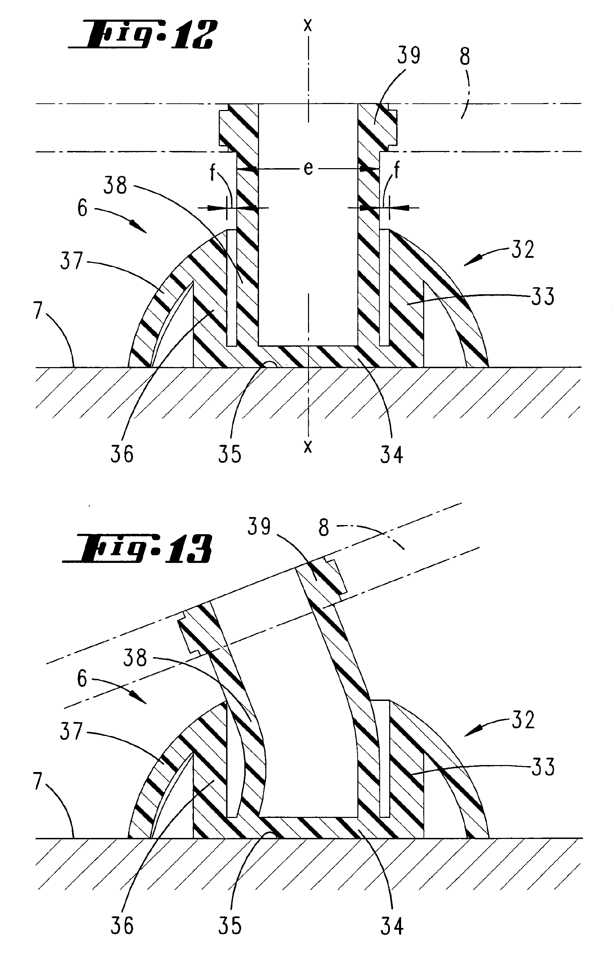

Zufolge der elastischen Eigenschaften stellt sich der Verbindungsabschnitt 38 nach Fortfall der auf diesen einwirkenden Kräfte selbsttätig in die Grundstellung gemäß Fig. 12 zurück.

### BEZUGSZEICHENLISTE

- 1: Küchenmaschine
- 2: Rührgefäß-Aufnahme
- 3: Bedienfeld
- 4: Rührgefäß
- 5: Gehäuse
- 6: Stützfuß
- 7: Tischfläche
- 8: Gehäuseboden
- 9: Fortsatz
- 10: Schalenteil
- 11: Schalenwandung
- 12: Schalenraum
- 13: Schalenboden
- 14: Dornteil
- 15: Stirnfläche
- 16: Elastomerteil
- 17: Boden
- 18: Standfläche
- 19: Mantelabschnitt
- 20: Verdickung
- 21: Ringnut
- 22: Schalendecke
- 23: Außengewinde
- 24: Schraubmutter
- 25: Scheibenteil
- 26: Standteil
- 27: Stützfläche
- 28: Ringteil
- 29: Durchtrittsöffnung
- 30: Elastomerteil
- 31: Aufnahme
- 32: Elastomerteil
- 33: Schalenteil
- 34: Schalenboden
- 35: Standfläche
- 36: Schalenwandung
- 37: Stützwandung
- 38: Verbindungsabschnitt
- 39: Anbindungsbereich

- a: Bewegungsrichtung
- b: Bewegungsrichtung
- c: Spielmaß
- d: Innendurchmesser
- e: Durchmesser
- f: Abstandsmaß

- x: Vertikalachse

## Patentansprüche

1. Standfuß (6), insbesondere für eine Tisch-Küchenmaschine (1), mit einem eine Standfläche (35) ausbildenden Elastomerteil (32) zur Verbindung mit der Küchenmaschine, wobei das Elastomerteil (32) einen nach oben abragenden Verbindungsabschnitt (38) aufweist, der Verbindungsabschnitt (38) in einem Schalenteil (33) wurzelt und eine Schalenwandung (36) sich nur über einen Teil der Höhe des Verbindungsabschnittes (38) erstreckt, wobei darüber hinaus die Schalenwandung (36) in Abhängigkeit von einer Auslenkung des Verbindungsabschnittes (38) eine zusätzliche Abstützung erbringt, **dadurch gekennzeichnet, dass** der Schalenboden (34), der umgeben von der Schalenwandung (36) den Verbindungsabschnitt (38) trägt, geeignet ist, sich im Betriebszustand auf einer Tischfläche oder dergleichen abzustützen, und dass die Schalenöffnung im Betriebszustand nach vertikal oben weist.

2. Standfuß nach Anspruch 1, **dadurch gekennzeichnet, dass** der Verbindungsabschnitt (38) rohrartig gebildet ist.

3. Standfuß nach einem der Ansprüche 1 oder 2, **dadurch gekennzeichnet, dass** ein freies Abstandsmaß (f) zwischen einer Außenfläche des Verbindungsabschnittes (38) und einer Innenfläche des Schalenteiles (33) 1/10 bis 1/5 des Durchmessers (e) des Verbindungsabschnittes (38) entspricht.

4. Standfuß nach einem der Ansprüche 1 bis 3, **dadurch gekennzeichnet, dass** die Schalenwandung (36) radial außen in eine zur Auflage auf dem Boden ausgelegte Stützwandung (37) übergeht.

## Claims

1. Foot (6) in particular for a table top food processor (1), comprising an elastomer part (32) which forms a base (35) and connects to the food processer, the elastomer part (32) comprising a connection portion (38) which projects upwards, the connection portion (38) being rooted in a shell part (33) and a shell wall (36) extending over only a portion of the height of the connection portion (38), the shell wall (36) furthermore producing an additional support depending on a displacement of the connection portion (38), **characterised in that** the shell bottom (34), which, surrounded by the shell wall (36), bears the connection portion (38), is capable of supporting itself on a table surface or the like in the operating state, and **in that** the shell opening is directed vertically upwards in the operating state.

2. Foot according to claim 1, **characterised in that** the connection portion (38) is tubular.

3. Foot according to either of claims 1 or 2, **characterised in that** a free clearance (f) between an outer surface of the connection portion (38) and an inner surface of the shell portion (33) corresponds to 1/10 to 1/5 of the diameter (e) of the connection portion (38).

4. Foot according to any of claims 1 to 3, **characterised in that** the shell wall (36) projects radially outwards into a supporting wall (37) which is designed to be supported on the bottom.

## Revendications

1. Pied de support (6), en particulier pour appareil ménager de table (1), comprenant une partie d'élastomère (32) formant une surface de support (35) pour se raccorder à l'appareil ménager, dans lequel la partie d'élastomère (32) présente une section de raccordement (38) faisant saillie vers le haut, la section de raccordement (38) s'enracine dans une partie de coque (33) et une paroi de coque (36) s'étend seulement sur une partie de la hauteur de la section de raccordement (38), dans lequel la paroi de coque (36) offre un appui supplémentaire en fonction d'une déviation de la section de raccordement (38), **caractérisé en ce que** le fond (34) de la coque, qui est entouré par la paroi de coque (36) et porte la section de raccordement (38), convient pour s'appuyer sur une surface de table à l'état de fonctionnement et **en ce que** l'ouverture de la coque est tournée vers le haut à la verticale à l'état de fonctionnement.

2. Pied de support selon la revendication 1, **caractérisé en ce que** la section de raccordement (38) a une forme tubulaire.

3. Pied de support selon l'une quelconque des revendications 1 ou 2, **caractérisé en ce qu'**une mesure d'espacement libre (f) entre une surface externe de la section de raccordement (38) et une surface interne de la partie de coque (33) correspond à 1/10^{ème} à 1/5^{ème} du diamètre (e) de la section de raccordement (38).

4. Pied de support selon l'une quelconque des revendications 1 à 3, **caractérisé en ce que** la paroi de coque (36) se convertit radialement vers l'extérieur en une paroi d'appui (37) dimensionnée pour application sur le support.
